# EUROPÄISCHE PATENTANMELDUNG

(11) **EP 2 096 089 A1**
(43) Veröffentlichungstag der Anmeldung: **02.09.2009**
(21) Anmeldenummer: 08102008.3
(22) Anmeldetag: 26.02.2008
(51) Int. Cl.: C04B 24/26, C04B 24/16

(54) **Betonzusatzmittel**

(71) Anmelder: Spindler, Neil, 38789 Puntagorda, Islas Canarias (ES)
(72) Erfinder: Spindler, Neil, 38789 Puntagorda, Islas Canarias (ES)
(74) Vertreter: Jönsson, Hans-Peter

(57) **Zusammenfassung**

Betonzusatzmittel enthaltend wenigstens ein in Wasser lösliches oder dispergierbares Alkalimetall- und/oder Erdalkalimetallsalz der Gluconsäure (Gluconat) einschließlich der freien Säure, wenigstens ein in Wasser lösliches oder in Wasser dispergierbares Alkalimetallund/oder Erdalkalimetallsalz einer Polycarbonsäure, ausgewählt aus Polycarboxylaten, einschließlich der freien Säuren, wenigstens ein wasserlösliches oder dispergiertes Sulfonat und/oder Polycarboxylatether und Wasser. Die Verwendung des Betonzusatzmittles zur Verbesserung der Flissfähigkeit von Betonmischungen.

## Beschreibung

Gegenstand der Erfindung ist ein Betonzusatzmittel zur Verbesserung der Fliessfähigkeit von Betonmischungen, die Verwendung der Betonzusatzmittel sowie die daraus erhältlichen Fertigbetonmischungen.

Moderne Betone mit erhöhter Dauerhaftigkeit (Negativbeispiel: deutsche Autobahnbrücken aus den 60-er Jahren) zeichnen sich durch eine hohe Gefügedichte aus; diese verhindert und/oder verzögert das Eindringen von schädlichen Substanzen, welche den Beton und/oder die Armierungseisen langfristig angreifen, vor allem Wasser, CO₂, Salze. Es ist daher notwendig, möglichst wenig Anmachwasser bei der Herstellung von Beton zu verwenden, da überschüssiges Wasser beim späteren Verdunsten Kapillarporen hinterlässt, welche wiederum die Gefügedichte herabsetzen. In der Europäischen Betonnorm EN-206 werden für bestimmte Expositionsklassen (=Einsatzgebiete des Betons) Obergrenzen für den so genannten Wasser-Zementwert gesetzt. Dieser definiert das Verhältnis zwischen Wassergewicht und verwendetem Zementgewicht.

Wird Beton also gemäß dem Grundrezept Zement-Gesteinszuschläge-Wasser (so genannter 3-Phasen-Werkstoff) mit sehr wenig Wasser angemacht (aber natürlich immer genug, um eine vollständige Hydratation des Zements zu gewährleisten), wird die Qualität mithin sehr gut, aber der Beton lässt sich nicht mehr gut verarbeiten (und schon gar nicht pumpen), da er zu steif ist. Ein gut pumpbarer Beton (das sind mindestens 70% aller Fälle) sollte eine Konsistenz "weich" haben. Die Konsistenz eines Betons wird ca. 5 Minuten nach dem Anmischen mittels verschiedener Verfahren bestimmt; ein allgemein anerkanntes und verwandtes Verfahren ist der so genannte "Abrams-Konus". Hierbei wird ein genormter Metallkonus mit dem frischen Beton gefüllt, sodann der Konus hochgezogen, wobei der verbleibende Betonkonus in sich zusammensackt und hernach in Zentimetern gemessen, um wie viel der Betonkonus an Höhe verloren hat. Die oben erwähnte Konsistenz "weich" ist bei einem Absacken von 6 bis 9 cm gegeben.

Um diese gegensätzlichen Anforderungen zu erfüllen, sind so genannte Betonverflüssiger und/oder Fliessmittel (bereits in den 1950-er Jahren) als Betonzusatzmittel entwickelt worden. Der Unterschied ist einfach, dass Fliessmittel wesentlich effektiver als Betonverflüssiger sind. Mit Fliessmitteln kann man beispielsweise Betone herstellen, die so flüssig sind, dass sie sich selbst nivellieren (wie Bodenausgleichsmasse); dies entspricht dann einem Konus von etwa 22-26 cm.

Ein weiterer Aspekt ist die zeitliche Wirksamkeit des zugesetzten Fliessmittels im Beton. Während die "alten" Betonverflüssiger nur ca. 30 bis 40 Minuten lang Wirkung entfalteten, sind moderne Hochleistungs-Fliessmittel bis zu 2 Stunden wirksam. Dieser Punkt ist extrem wichtig für Transportbetonhersteller, da die Mischerfahrzeuge in der Regel eine Stunde oder länger vom Zeitpunkt der Anmischung des Betons bis zum Abschluss des Abladevorgangs am Lieferort benötigen. Deshalb wurden die bekannten, einfachen Betonverflüssiger auch immer erst bei Ankunft auf der Baustelle vom LKW-Fahrer in die Mischtrommel aus einem kleinen Zusatztank dosiert. Moderne Fliessmittel können dagegen direkt im Betonwerk beim Mischvorgang zugegeben werden, wodurch der potentielle Schwachpunkt LKW-Fahrer ausgeschaltet wird und die Dosierung wesentlich genauer erfolgen kann.

Bekanntermaßen gibt es eine Vielzahl von Zementsorten, da man Zement aus vielerlei Grundprodukten herstellen kann. Der Ur-Zement wurde seit Mitte des 19. Jahrhunderts aus einem bestimmten Kalkstein gebrannt, welcher aus der Umgebung der englischen Halbinsel Portland stammte. Der Name für diesen "reinen" Zement hat sich bis heute erhalten: Portland-Zement, auch wenn chemisch sehr ähnliches Gestein auch anderswo auf der Welt abgebaut und zu Zementklinkern gebrannt wird. Da Portland-Klinker nun einmal vergleichsweise sehr teuer ist, wird gerne von Seiten der Zementindustrie mit Beimischungen gearbeitet oder gleich ein ganz anderer Grundstoff eingesetzt, beispielsweise Hochofenschlacke, andere Kalke, Stäube oder das bereits den Römern bekannte Vulkangestein aus der Gegend um Pozzuoli (bei Rom). Letztere "puzzolanische" Aschen sind oft am preisgünstigsten, da in vielen Teilen der Welt vor Ort vorhanden, so also nicht nur auf den Kanarischen Inseln, sondern auch beispielsweise in der Eifel, in der Karibik und Teilen von Südamerika.

Es ist offensichtlich, dass die chemische Zusammensetzung dieser verschiedenen Zemente völlig unterschiedlich ist, und dass daher ein bestimmtes Fliessmittel bei einer Zementsorte hervorragend wirken kann und bei anderen nur in geringem Umfang. Daher bieten alle Hersteller von Betonzusatzmitteln (das ist der Sammelbegriff für alle möglichen Zusatzmittel, einschließlich Fliessmittel, aber auch Erhärtungsverzögerer, Erhärtungsbeschleuniger, Luftporenbildner etc.) eine Vielzahl von Fliessmitteln auf der Basis unterschiedlicher Rohstoffkombinationen an.

Interessanter- und verständlicherweise sind die angebotenen Zusatzmittel auf die gängigsten Zementsorten zugeschnitten. Wer als Betonhersteller von seinem Zementlieferanten einen chemisch sehr eigenartigen (obwohl in die europäische Zementnorm EN 197-1 passenden und konformen) Zement geliefert bekommt, kann also das Problem haben, dass er unter Umständen kein Fliessmittel findet, das zu seinem Zement optimal "passt".

Um insbesondere Zemente mit hohem puzzolanischem Anteil oder beispielsweise sonstigem hohem Eisenanteil (z.B. CEM II/A-P, CEM II/B-P oder CEM IV oder Zemente aus oder mit Hochofenschlacken) mit besonderen chemischen Eigenschaften (zum Beispiel erhöhter Anteil an Brownmillerit und/oder Albit und/oder Gismondin oder anderer Feldspate) ordnungsgemäß verflüssigen zu können, besteht ein Bedarf an Betonverflüssigern und/oder Fliessmitteln, welche die durch die vorgenannten Substanzen hervorgerufenen für die Verarbeitung negativen Wirkungen im frisch angemischten Beton gar nicht erst entstehen lassen oder zumindest behindern/verzögern. Die für die Verarbeitung negativen Wirkungen sind: die rasche Bildung von großen Kristallen, welche die Rheologie (Fliess- und Ausbreitverhalten) und den Wasseranspruch des Frischbetons negativ beeinflussen, die kurze Verarbeitungszeit des Betons und die mangelhafte Druckfestigkeit nach 28 Tagen bei einer definierten Zementzugabe (im Vergleich zu anderen Zementen bei gleicher Betonrezeptur).

Tatsächlich handelt es sich um das Problem, wie beispielsweise der hohe Eisengehalt im Zement komplexiert werden kann mit der Folge, dass das Eisen in der Schwebe gehalten wird und nicht vorzeitig (möglichst also erst 90 bis 120 Minuten nach Wasserzugabe) in Lösung geht.

Bekannte Fliessmittelkompositionen sind nicht für den Einsatzbereich mit den vorgenannten Zementen bestimmter Herkunftsgebiete, z.B. den Kanarischen Inseln, optimiert und verhindern daher nicht die rasche Bildung großer Kristalle mit den beschriebenen negativen Sekundärwirkungen.

EP 0605318 A1 beschreibt eine Zusammensetzung zum Verbessern der rheologischen Eigenschaften zementbasierter Produkte.

Die Zusammensetzung, welche die rheologischen Eigenschaften von Produkten der fraglichen Art verbessert, ist dadurch gekennzeichnet, dass
- das superplastifizierende oder Wasser-reduzierende Mittel ausgewählt ist aus:
   o Kondensaten von Naphtalinsulfonat und Formol (PNS) in Form der Salze mit Alkalimetallen, Erdalkalimetallen Ammonium, Aminen und Alkanolaminen,
   o sulfitierten Melaminen und modifizierten Melaminen, Kondensaten von Melamin, sulfinierten Derivaten und Formol in Form der Alkali- und Erdalkalisalze,
   o ggf. gereinigten Lignosulfonaten,
   o Polystyrolsulfonaten und Copolymeren Maleinsäureanhydrid, und
   o Gemischen der vorstehenden Substanzen;
- das Stabilisierungsmittel, welches fähig ist mit den Calziumionen des Produkts auf Zementbasis ein stabiles Chelat zu bilden, ausgewählt ist aus:
   o Hydroxycarbonsäuren und deren Salzen, insbesondere denen aus der Gruppe umfassend Salizyl-, Zitronen-, Milch-, Glucon-, Glucoheptan-, Wein- und Mukonsäure,
   o Aldosen und Ketosen, insbesondere Saccharose und Maissirups,
   o Mineralischen Komplexbildnern, insbesondere Phosphaten, Boraten und Polyphosphaten,
   o organischen Komplexbildnern, insbesondere ausgewählt aus der Gruppe umfassend EDTA, NTA,
   o Antioxidantien, insbesondere aus denen der Gruppe umfassend Ascorbinsäure und Isoascorbinsäure, und
   o Bevorzugt, Phosphonsöurederivaten mit polymerer Struktur, welche Hydroxy- und/oder Amino- und/oder Carboxylatgruppen sowie eine oder mehrere Methylenphosphongruppen enthalten;
- das Polycarboxyl-Dispergiermittel ausgewählt ist aus der Gruppe von Substanzen, umfassend die wasserlöslichen Homopolymere und Copolymere ethylenischer Carbonsäuren und deren Alkalisalze, wobei diese Polymere hervorgehen aus der Polymerisation oder Copolymerisation ethylenischer Säuren, ausgewählt aus der Gruppe umfassend Acryl-, Methacryl-, Fumar-, Malein-, Itakon-, Croton-, Akonit-, Sinapin-, Mesacon-, Undecen-, Angelica-, Hydroxyacrylsäure sowie Maleinsäureanhydrid. Insoweit wird vollinhaltlich auf die EP 0605318 A1 Bezug hierauf genommen.

Die hierin beschriebenen Zusammensetzungen bestehen somit prinzipiell aus zwei Komponenten nämlich einem superplasitfizierenden oder Wasser-reduzierenden Mitte und einem Stabilisierungsmittel, das fähig ist, mit den Calciumionen der Produkte auf Zementbasis ein stabiles Chelat zu bilden.

Jörg Rickert, Concrete Technology Reports 2004-2006, beschreibt den Einfluss von Langzeitverzögerern auf der Basis von Phosphonsäure auf die Hydratation von Klinker und Zement. Je nach Zementtyp wird die Hydratation unterschiedlich beeinflusst. Bei der Hydratation von reinem C₃A und C₄AF führt der Verzögerer zu einer verstärkten Bildung hexagonaler Calciumaluminathydrate während die Hydratation von reinem C₃S bis zu 180 Tagen vollständig blockiert wird. Somit ist die tatsächliche Wirkung der Phosphonsäuren allein, auch wenn diese in Kombination mit Superverflüssigern in einem zweikomponentigen Gemisch eingesetzt wird, nicht ohne genaue Kenntnis der Zusammensetzung des Zements vorhersagbar und auch nicht recht beherrschbar, da es regelmäßig zu unvorhersehbaren "Ausreißern" kommt.

US 2003/0127026 A1 beschreibt eine schnellhärtende Zementzusammensetzung.

Gegenstand der vorliegenden Erfindung ist in einer ersten Ausführungsform ein Betonzusatzmittel (Fliessmittel mit leicht verzögernder Wirkung) zur Erzeugung einer langanhaltenden Fliessfähigkeit von Betonmischungen und gleichzeitig optimaler Ausildung der kristallinen Betonmatrix mit der gewünschten Folge einer hohen Druckfestigkeit nach 28 Tagen, enthaltend:
(a) wenigstens eine in Wasser lösliche oder dispergierbare Säure,
(b) wenigstens ein in Wasser lösliches oder dispergierbares Alkalimetall- und/oder Erdalkalimetallsalz einer Säure (a),
(c) wenigstens ein in Wasser lösliches oder dispergierbares Alkalimetall- und/oder Erdalkalimetallsalz einer Polycarbon-säure, ausgewählt aus Polycarboxylaten, einschließlich der freien Säuren, oder Polycarboxylatether,
(d) wenigstens ein wasserlösliches oder dispergierbares Sulfonat, und Wasser.

Mit Hilfe der erfindungsgemäßen Betonzusatzmittel ist es möglich, Betone in der gewünschten Konsistenz herzustellen, insbesondere zu transportieren und zu verarbeiten, die anderenfalls zu schnell ansteifen und/oder eine erhöhte Wassermenge benötigen und/oder nicht ihre geplante Endfestigkeit erreichen. Die erfindungsgemäßen Betonzusatzmittel entfalten ihre Wirkung nicht nur bei einem bestimmten, sondern bei einer großen Zahl von verschiedenen Zementsorten.

Auf den Kanarischen Inseln geschieht beispielsweise folgendes: Beide Zementhersteller (echtes Duopol) bieten zwar einen genormten Zement mit der Bezeichnung "CEM II/A-P 42,5 R" an, aber dieser Zement hat einige besondere Eigenschaften, die beispielsweise der gleiche Zementtyp, in Deutschland hergestellt, nicht hat. Es handelt sich konkret um einen überdurchschnittlich hohen Anteil an Brownmillerit [Ca-Al-Ferrit oder Ca₂(Al,Fe)₂O₅] - in der Betontechnologie wird diese Zementphase mit C4AF bezeichnet - sowie Albit [Na-Al-Silikat oder NaAlSi₃O₈] sowie Gismondin [Ca-Al-Silikat-Hydrat oder CaAl₂Si₂O₈ x 4H₂O]. Albit und Gismondin sind Feldspate.

Diese vorgenannten Zementbestandteile reagieren (nach Zugabe des Anmachwassers) sehr schnell unter Bildung groß wachsender Kristalle und bewirken dadurch, dass der Beton (genauer gesagt: der Zementleim im Beton) sehr schnell ansteift und gleichzeitig viel Anmachwasser benötigt; Ansteifen im Sinne der vorliegenden Erfindung umfasst Zeiträume von 3 bis 10 Minuten, also zu kurze Zeiten, um den Beton mit der gewünschten oder geplanten Konsistenz transportieren und verarbeiten zu können.

Der übliche Gehalt von C4AF in einem Zement liegt bei 1 bis 3%; bei den kanarischen Zementen liegt er bei 5 bis 10%; das gleiche Problem kann bei Zementen aus Hochofenschlacken auftreten. Auf den Kanaren wird dieser hohe Eisengehalt voraussichtlich durch die verwendete puzzolanische Vulkanasche in den Zement importiert.

Darüber hinaus wird angenommen, dass die vorgenannten großen, plattenförmigen Kristalle zu einem späteren Zeitpunkt (nach ca. 90 Minuten, gerechnet ab dem Anmischen des Betons) die Entwicklung und/oder Verzahnung der eigentlich die Betonstruktur ausmachenden nadelförmigen Calziumsilikat-Kristalle (international übliche Kurzbezeichnung: C2S, C3S) behindern; genau diese 2 Kristallarten entwickeln sich aber erst ab ca. 90 bis 120 Minuten nach dem Anmischen des Betons; daher darf Beton beispielsweise auch nicht später als 90 Minuten eingebaut werden, es sei denn, er wäre mit Erstarrungsverzögerern versetzt. Die Konsequenz aus alldem ist ein Beton, welcher weniger druckfest ist, als er eigentlich sein könnte, wenn die Entwicklung der Kristallmatrix des Zementleims ungestört und vollständig ("nicht gebremst") ablaufen könnte.

Genau die Summe aus dem Vorgesagten geschieht auf den Kanarischen Inseln: der Beton benötigt sehr viel Wasser beim Anmischen, bleibt trotzdem nur (zu) kurze Zeit verarbeitungsfähig und erreicht nicht die aufgrund der zugefügten Zementmenge geplante Endfestigkeit - und dies trotz Zugabe von traditionellen Betonverflüssigern und/oder Fliessmitteln in erheblicher Menge, auch solchen der so genannten letzten Generation (PCE).

Mit anderen Worten: die bis dato bekannten oder gebräuchlichen Fliessmittel können die auf den Kanarischen Inseln (und womöglich anderswo) gebräuchlichen Zemente nicht ordnungsgemäß verflüssigen. Dies liegt möglicherweise daran, dass den Zusatzmittelherstellern die oben genannten chemischen Eigenheiten des kanarischen Zements und die daraus resultierenden Effekte nicht bekannt sind.

Das erfindungsgemäße Fliessmittel ist nun für genau diesen Einsatzzweck optimiert. Es enthält Inhaltsstoffe welche die Eisenverbindungen im Zement komplexieren und den Zement quasi "aktivieren" mit der Folge, daß er seine ihm innewohnende Druckfestigkeit im Laufe der Hydratation zur Gänze entfalten kann.

Darüber hinaus ist es aus wenigstens vier chemischen Grundsubstanzen zusammengesetzt, während bisherige Fliessmittel üblicherweise höchstens bis zu zwei oder drei Grundsubstanzen enthalten.

Bei den erfindungsgemäßen Betonzusatzmitteln handelt es sich um eine Produktfamilie, da verschiedene Zemente (selbst beispielsweise die ziemlich genau definierte Zementsorte CEM II/A-P) von Produzent zu Produzent und von Herstellungsort zu Herstellungsort unterschiedliche chemische Eigenschaften haben. Theoretisch müsste man daher für jeden Zement pro Herstellungsort ein auf ihn optimiertes Fliessmittel herstellen, wobei die chemischen Grundsubstanzen (wie folgt) immer die gleichen sein werden, nicht jedoch ihr Abmischungsverhältnis.

Durch das vorliegende "Baukastensystem" kann das erfindungsgemäße Betonzusatzmittel maßgeschneidert für jede chemische Kombination Zement/Zuschläge in weiten Bereichen eingestellt werden bezüglich der Eigenschaften:
- Verflüssigung
- Rheologie
- Verzögerung
- ungestörte und möglichst vollständige Entwicklung der kristallinen Matrixstruktur, welche nach derzeitigem technischen Verständnis hauptsächlich aus C2S und C3S besteht
insbesondere also auch für die stark puzzolanischen und feldspatreichen Betone der Kanaren, wo herkömmliche Fliessmittel nach wie vor weitgehend versagen.

Überraschend und unerwartet wurde bei Einsatz des erfindungsgemäßen Betonzusatzmittels gefunden, dass im Zusammenhang mit stark puzzolanischen Betonen nicht nur die Verflüssigung über den gewünschten langen Zeitraum von 90 bis 120 Minuten nach Anmischen einwandfrei gelingt und sich ein sehr befriedigendes rheologisches Verhalten einstellt, sondern die Endfestigkeit der so hergestellten Betone sich auf dem Niveau herkömmlicher nicht-puzzolanischer Betone befindet, die nach vergleichbarem Rezept hergestellt wurden, und nicht mehr weit darunter (wegen der kompletteren Hydratation und Behinderung der plattenförmigen, schnellwachsenden Kristalle feldspatischer Provenienz, welche wiederum vermuteterweise das Wachstum der Calciumsilikatkristalle behindern). Das erfindungsgemäße Betonzusatzmittel "aktiviert" den besonders feldspatreichen kanarischen Zement.

Es ist bisher im Stand der Technik nicht gelungen, vier oder mehr Wirkstoffkomponenten in einem zulassungsfähigen Betonzusatzmittel zu kombinieren. Aktueller Stand der Technik der Verflüssigung speziellerer oder komplizierterer Betone ist, zwei Zusatzmittel getrennt voneinander in den gleichen Beton zu dosieren: zum einen den Verflüssiger (=Fliessmittel), zum anderen den Stabilisierer mit/ohne verzögernde Wirkung. Dadurch werden die Ungenauigkeiten des Dosiervorgangs in der Praxis potenziert und somit auch die Fehlerquellen. Selbst diese Zweierkombinationen kommen nicht über drei Wirkstoff-komponenten hinaus.

Es ist im Sinne der vorliegenden Erfindung besonders bevorzugt, Gemische aus Gluconsäure (als Beispiel für eine in Wasser lösliche oder dispergierbare Säure der Komponente (a)) und Natriumgluconat (als Beispiel für ein Alkalimetallsalz einer Säure (a)) einzusetzen.

Entsprechende wässrige Lösungen sind jeweils im Handel erhältlich. Als besonders bevorzugt hat sich ein Gemisch aus Gluconsäure und Natriumgluconat herausgestellt, bei dem das Gewichtsverhältnis von Gluconsäure zu Alkalimetallgluconat im Bereich von 50 zu 1 bis 1,5 zu 1 Gewichtsteilen eingestellt ist.

Die Säurekomponente (a) ist in den erfindungsgemäßen Betonzusatzmitteln vorteilhafterweise in einer Menge von 3 bis 50 Gew.% enthalten. Die Säuren umfassen beispielsweise auch Carbonsäuren oder Phosphonsäuren. Insoweit wird auf die Definition der Stabilisierungsmittel gemäß der EP 0605318 A1, Seiten 4 und 5 vollumfänglich Bezug genommen. Insbesondere umfasst die erfindungsgemäße Säure Gluconsäure und/oder Phosphonobutan-1,2,4-tricarbonsäure als Beispiel für eine Hydroxycarbonsäure, die im Sinne der vorliegenden Erfindung als Komponente (a) einsetzt werden kann. Die Bezeichnung Carbonsäure steht im Allgemeinen als Sammelbezeichnung für niedrig molekulare aliphatische und aromatische Carbonsäuren mit in der Regel mehr als 2 Carboxylgruppen im Molekül, beispielsweise Zitronensäure, Agaricinsäure und 1,2,3-Propantricarbonsäure, Trimellithsäure, Trimesinsäure, Pyromellit(h)säure und Mellithsäure.

Die vorgenannte Komponente (a) kann in den erfindungsgemäßen Betonzusatzmitteln in unverdünnter Form aber auch als wässrige Lösung eingesetzt werden. Üblicherweise liegt die Komponente (a) als etwa 50 Gew.%ige Lösung vor, so dass die Endgehalte in den Betonzusatzmitteln etwa 1 bis 30 Gew.% Wirkstoffgehalt entsprechen.

Auch die Komponente (b) wird üblicherweise nicht in konzentrierter Form sondern in Pulverform oder in einer verdünnten Form eingesetzt, die der Konzentration der Komponente (a) entspricht. Dementsprechend beträgt die tatsächliche Konzentration an Komponente (b) in den erfindungsgemäßen Betonzusatzmitteln 0,5 bis 15 Gew.%.

Als Basissäuren der hier eingesetzten Salze kommen dieselben Säuren in Frage, die auch in der Komponente (a) definiert sind.

Die Bezeichnung Polycarbonsäuren der Komponente (c) steht als Bezeichnung für organische Polymere mit einer Vielzahl von Carboxygruppen in den einzelnen Makromolekülen, die durch Homopolymerisation oder Copolymerisation ungesättigter ein- und mehrbasiger Carbonsäuren hergestellt werden. Wichtige Vertreter dieser auch als Polyelektrolyte oder Polysäuren bezeichneten Polycarbonsäuren sind unter anderem Polyacrylsäuren, Polymethacrylsäuren, Polymaleinsäuren-Derivate als synthetische, Carboxymethylcelulose als halbsynthetische und Alginsäure oder Pektinsäure als natürliche Polymere.

Polyacrylsäuren sind bekanntermaßen wasserlöslich, insbesondere in Form ihrer Salze. Sie werden in der Säure- oder Salzform (Natrium-, Ammonium-Salze) angeboten. Technische Produkte haben üblicherweise Molmassen im Bereich von 2.000 bis 300.000 g/Mol.

In Wasser unlösliche, aber stark quellende und damit dispergierbare Polyacrylsäuren können durch vernetzende Copolymerisation von Acrylsäuren mit bi- und polyfunktionellen Monomeren, beispielsweise mit Polyallylglycosen, oder durch partielle Vernetzung mit mehrwertigen Ionen, beispielsweise Aluminiumionen synthetisiert werden. Polyacrylsäuren gehören als Polysäuren zu den Polycarbonsäuren. Die Polyacrylsäuren sind üblicherweise hygroskopisch feste Produkte mit Glasübergangstemperaturen von 105 bis 130 °C und zersetzen sich oberhalb 200 bis 250 °C unter Wasserabspaltung und Zersetzung. Polyacrylsäuren werden als Festkörper, wässrige Lösungen oder Emulsionen angeboten.

Ferner sind Polycarboxylatether als Bestandteil (c) Teil des erfindungsgemäßen Betonzusatzmittels. Diese sind seit einiger Zeit als so genannte "Superverflüssiger" bekannt.

Die Menge der Polycarboxylate, die im Sinne der vorliegenden Erfindung in den Betonzusatzmitteln eingesetzt wird, beträgt 5 bis 50 Gew.%, bezogen auf eine etwa 50 Gew.%ige Wirkstoffkonzentration mithin 2 bis 25 Gew.%.

Die Komponente (d), das Sulfonat, ist vorzugsweise in einer Wirkstoffmenge von 4 bis 30 Gew. % im erfindungsgemäßen Betonzusatzmittel enthalten, wenn man davon ausgeht, dass auch dieses als etwa 50 Gew.%ige wässrige Lösung eingesetzt wird. Als Sulfonat im erfindungsgemäßen Betonzusatzmittel besonders bevorzugt ist wenigstens ein Alkalimetall- und/oder Erdalkalimetallsalz der Ligninsulfonsäure einschließlich der freien Säure. Ligninsulfonsäure ist bekanntermaßen das beim Sulfitaufschluss von Holz zur Gewinnung von Cellulose anfallende Reaktionsprodukt aus nativem Lignin und schwefliger Säure. In Abhängigkeit in den vom Aufschlussverfahren verwendeten Basen resultieren wasserlösliche Natrium-, Ammonium-, Calcium- oder Magnesiumsalze der Ligninsulfonsäure. Angaben zur molekularen Masse der Ligninsulfonsäure variieren mit Werten von 10.000 bis 200.000. Die Anzahl der Sulfonsäure-Gruppen beträgt etwa 2 pro 5 bis 2 pro 8 Phenylpropaneinheiten. Ligninsulfonsäure und ihre Salze, die Ligninsulfonate, sind Bestandteil der Sulfitablaugung aus denen sie als braunes Pulver isoliert werden. Daneben sind aber auch aus dem Stand der Technik (EP 0605318 B1) bekannte Kondensationsprodukte von Naphthalinsulfonat mit Formaldehyd in Form der Salze mit Alkalimetallen, Erdalkalimetallen, Amonium, Aminen und Alkanolaminen einsetzbar.

Als fünfte Komponente (e) kann ein Tensid eingesetzt werden. Tenside sind bekanntermaßen Verbindungen, die die Grenzflächenspannung herabsetzen. Im Sinne der vorliegenden Erfindung sollten diese Säuren und Basen stabil sein und bei der Lagerung und Anwendung keine Ausfällungen zeigen. Besonders bevorzugt sind hierbei nichtionische Tenside, insbesondere Fettalkohole, Fettalkoholethoxylate, Alkylphenolethoxylate, Sorbitanfettsäureester, Alkylpolyglucoside und/oder N-Methylglucamide. Beispielhaft wird an dieser Stelle auf Isotridecanol hingewiesen, das wie die anderen Tenside insbesondere eingesetzt wird, wenn die Zuschläge zum Zement frisch getrocknet und nicht gewaschen sind. Diese wirken dann wie ein Schmiermittel und verbessern beispielsweise die Pumpfähigkeit von Beton. Die Menge der Komponente (e) beträgt vorzugsweise1 bis 10 Gew.%, bezogen auf 100 Gew.-Teile Betonzusatzmittel.

Eine weitere Ausführungsform der vorliegenden Erfindung betrifft die Verwendung der oben definierten Betonzusatzmittel zur Verbesserung der Fliessfähigkeit von Betonmischungen. So wurde gefunden, dass Betonmischungen unter Einsatz der o.g. Betonzusatzmittel sehr stark und dauerhaft (mindestens 90 Minuten ab Anmischungsvorgang des Betons) verflüssigt werden. Je nach Dosierung des Fliessmittels werden "Abrams-Koni" von ca. 9 bis zu 24 erreicht. Diese Wirkungen werden erzielt, wenn man die erfindungsgemäßen Betonzusatzmittel in einer Menge von 0,4 bis 1,2 Gew.-%, insbesondere 0,6 bis 0,8 Gew.-%, bezogen auf den Zementgehalt im Beton einsetzt. Eine zu geringe Dosierung führt wie bei allen Betonzusatzmitteln nicht zur gewünschten Wirksamkeit des Fliessmittels. Eine erheblich zu hohe Dosierung kann zur Folge haben, dass der Beton viel länger als üblich benötigt, um den Abbindevorgang zu beenden, beispielsweise 22 Stunden oder mehr, insbesondere bei tiefen Außentemperaturen. Diese anfängliche Verzögerung hat jedoch keinen oder kaum negativen Einfluss auf das spätere Erhärtungsverhalten des Betons. Es wurde anhand zahlreicher Druckproben festgestellt, dass - bei einer Überdosierung von 1,5 Gew.-% des Fliessmittels und gleichzeitig tiefen Außentemperaturen um die 8 °C - höchstens die Druckfestigkeiten der Probewürfel nach 3 Tagen etwas geringer waren. Die Druckfestigkeiten der Probewürfel nach 7, 14 und insbesondere 28 Tagen waren wieder im normalen - vorhergeplanten - Bereich.

Eine weitere Ausführungsform der vorliegenden Erfindung betrifft Betonmischungen, die die erfindungsgemäßen Zusatzmittel wie oben definiert enthalten.

### Ausführungsbeispiele:

### Beispiel 1:

8 Gew.-Teile einer 46 Gew.-%igen wässrigen Lösung von Natriumgluconat mit dem Handelsnamen EMF 1240 der Fa. Jungbunzlauer, Basel, Schweiz,
18 Gew.-Teile einer 50 Gew.-%igen wässrigen Lösung Gluconsäurelösung,
18 Gew.-Teile einer 50 Gew.-%igen wässrigen Lösung von Ligninsulfonat,
23 Gew.-Teile eines Polyacrylats mit dem Handelsnamen Clercal® SL 17 und
33 Gew.-Teile Wasser wurden gemischt. Es ergab sich eine Dichte von ca. 1,14 g/cm³.

In der nachfolgenden Tabelle sind die Daten von verschiedenen Versuchen wiedergegeben: in den ersten drei Spalten sind angegeben:
die Menge an Zement,
das Verhältnis von Wasser zu Zement (W/Z), d.h. der Wasser-ZementWert, und
die Menge des eingesetzten Betonzusatzmittels.

Der Abrams-Konus gibt die Konsistenz des Betons an. In den letzten drei Spalten wird die Druckfestigkeit eines Standard-Probewürfels nach 3, 7 und 28 Tagen wiedergegeben.

**Ergebnis**

| **CEM** | **Verhältnis w/z** | **Zusatz Fliessmittel** | **Abrams-Konus** | **Resultat 3 Tage** | **Resultat 7 Tage** | **Resultat 28 Tage** |
|---|---|---|---|---|---|---|
| 300 kg | 0,45 | 3,4kg (=1,1 Gew.-%) | 9 | ∼ 16 N/mm² | ∼ 22 N/mm² | ∼ 31 N/mm |
| 325 kg | 0,48 | 3,9 kg (=1,2 Gew.-%) | 8 | ∼ 18 N/mm² | ∼ 30 N/mm² | ∼ 37 N/mm² |
| 350 kg | 0,46 | 4,2 kg (=1,2 Gew.-%) | 11 | ∼ 24 N/mm² | ∼ 30 N/mm² | ∼ 40 N/mm² |

Das oben genannte Betonzusatzmittel zeigt die beste Wirkung bei einem Beton mit geringem bis mittlerem Zementgehalt (280 bis 350 kg/m³ Beton).

## Patentansprüche

1. Betonzusatzmittel enthaltend
(a) wenigstens eine in Wasser lösliche oder dispergierbare Säure,
(b) wenigstens ein in Wasser lösliches oder dispergierbares Alkalimetall- und/oder Erdalkalimetallsalz einer Säure (a),
(c) wenigstens ein in Wasser lösliches oder dispergierbares Alkalimetall- und/oder Erdalkalimetallsalz einer Polycarbon-säure, ausgewählt aus Polycarboxylaten, einschließlich der freien Säuren oder Polycarboxylatether ,
(d) wenigstens ein wasserlösliches oder dispergierbares Sulfonat,
und Wasser.

2. Betonzusatzmittel nach Anspruch 1, **dadurch gekennzeichnet, dass** es ein Gemisch aus Gluconsäure (a) und Alkalimetallgluconat (b) enthält.

3. Betonzusatzmittel nach Anspruch 2, **dadurch gekennzeichnet, dass** das Gewichtsverhältnis von Alkalimetallgluconat (b) zu Gluconsäure (a) im Bereich von 1 zu 50 bis 1 zu 1,5 Gewichtsteilen beträgt.

4. Betonzusatzmittel nach einem der Ansprüche 1 bis 5, **dadurch gekennzeichnet, dass** es weiterhin wenigstens ein Alkalimetall- und/oder Erdalkalimetallsalz der Ligninsulfonsäure einschließlich der freien Säure (d) enthält.

5. Betonzusatzmittel nach einem der Ansprüche 1 bis 5, **dadurch gekennzeichnet, dass** es
3 bis 50 Gew.% Komponente (a),
1 bis 30 Gew.% Komponente (b),
5 bis 50 Gew.% Komponente (c),
8 bis 60 Gew.% Komponente (d) und
10 bis 50 Gew.% Wasser
aufweist.

6. Betonzusatzmittel nach einem der Ansprüche 1 bis 6, **dadurch gekennzeichnet, dass** es einen pH-Wert im Bereich von 3,0 bis 8,0 aufweist.

7. Verwendung eines Betonzusatzmittels nach einem der Ansprüche 1 bis 7 zur Verbesserung der Fliessfähigkeit von Betonmischungen.

8. Verwendung nach Anspruch 8, wobei man das Betonzusatzmittel in einer Menge von 0,4 bis 1,2, insbesondere 0,6 bis 0,8 Gew. %, bezogen auf das Zementgewicht einsetzt.

9. Fertigbetonmischung enthaltend ein Betonzusatzmittel gemäß einem der Ansprüche 1 bis 7.

10. Fertigbetonmischung nach Anspruch 10, enthaltend das Betonzusatzmittel in einer Menge von 0,2 bis 1,2, insbesondere 0,6 bis 0,8 Gew.-%, bezogen auf das Zementgewicht.
